# DEMANDE DE BREVET EUROPEEN

(11) **EP 1 982 861 A1**
(43) Date de publication de la demande: **22.10.2008**
(21) Numéro de dépôt: 08154492.6
(22) Date de dépôt: 14.04.2008
(51) Int. Cl.: B60K 11/08, F01P 11/10

(54) **Procédé de fabrication d'une cloison anti-recyclage d'air**

(30) Priorité: 17.04.2007 FR 0754528
(71) Demandeur: Inoplast, 07100 Annonay (FR)
(72) Inventeur: Sozet, Jean-Yves, 07610, VION (FR); Martin, Laurent, 07340, PEAUGRES (FR)
(74) Mandataire: Remy, Vincent Noel Paul

(57) **Abrégé**

L'invention concerne un procédé de fabrication d'une cloison (12a,12b) anti-recyclage d'air, la cloison étant destinée à être montée pivotante sur une face avant technique (10) de véhicule automobile entre :
- une première position, dite de montage,
- une seconde position, dite de fonctionnement sur le véhicule,
- au cours duquel on moule la cloison dans une troisième position, dite de moulage.

## Description

La présente invention concerne le domaine technique des cloisons anti-recyclage d'air pour véhicule automobile, et plus particulièrement le domaine des cloisons anti-recyclage d'air destinées à être montées sur une face avant technique de véhicule automobile.

II est connu de monter sur la face avant technique d'un véhicule automobile, des cloisons visant à limiter et canaliser la circulation d'air et les turbulences lorsque le véhicule est en déplacement, afin d'optimiser la circulation d'air sur un module de refroidissement porté par la face avant technique. Ces cloisons sont appelées anti-recyclage d'air car elles empêchent de refaire passer de l'air chaud dans le moudule de refroidissement et sont par exemple décrites dans le document FR 2 804 638.

Afin de faciliter le montage de ces cloisons sur le véhicule automobile, les cloisons anti-recyclage d'air peuvent être montées pivotantes sur la face avant technique et être ainsi susceptibles d'adopter une première position dite de montage dans laquelle les cloisons sont rabattues contre la face avant technique et une deuxième position dite de fonctionnement dans laquelle les cloisons sont dépliées.

Dans leur position de montage, du fait que les cloisons sont rabattues contre la face avant technique et que l'encombrement de l'ensemble comprenant les cloisons et la face avant en est ainsi limité, l'ensemble peut être facilement rapporté par le bas sur des éléments structurels du véhicule. Ainsi, l'ensemble comprenant les cloisons et la face avant peut être préparé, transporté et livré, prêt à être rapporté sur le véhicule automobile, ce qui permet un gain de temps non négligeable dans la chaîne d'assemblage du véhicule automobile.

Une fois l'ensemble monté sur le véhicule automobile, un simple pivotement des cloisons permet de les mettre dans leur position de fonctionnement. En particulier, dans leur position de fonctionnement, les cloisons anti-recyclage d'air sont destinées à venir en contact avec des éléments fonctionnels tels qu'une poutre ou un absorbeur de chocs ou des éléments de carrosserie extérieurs comme un bouclier de pare-chocs afin d'assurer le guidage de l'air entrant par une ouverture ménagée dans le bouclier.

Afin notamment d'éviter tout déplacement intempestif des cloisons d'une position à l'autre, il est souhaitable de prévoir des moyens de verrouillage des cloisons dans l'une et l'autre de leurs deux positions et d'intégrer ces moyens de verrouillage sur les cloisons.

Du fait de la complexité des moyens de verrouillage, la forme de chacune des cloisons dans l'une ou l'autre des deux positions peut alors présenter des « contre-dépouilles », ce qui rend la réalisation des cloisons par moulage relativement ardue.

En effet, du fait de la présence des contre-dépouilles, l'extraction de la cloison hors du moule peut être relativement difficile et les zones à proximité des contre-dépouilles risquent d'être fragilisées.

Par conséquent, il s'avère nécessaire de prévoir, au cours du procédé de fabrication de la cloison, un moule comprenant des cales mobiles permettant ainsi de tenir compte de la forme relativement complexe de la cloison.

Or, l'utilisation d'un tel outillage, à savoir les cales mobiles, peut être relativement coûteuse, a pour effet de rallonger la durée de fabrication des cloisons et encombre considérablement les moules de fabrication.

L'invention a notamment pour but de proposer un procédé de fabrication plus simple et plus économique.

A cet effet, l'invention a pour objet un procédé de fabrication d'une cloison anti-recyclage d'air, la cloison étant destinée à être montée pivotante sur une face avant technique de véhicule automobile entre :
- une première position, dite de montage,
- une seconde position, dite de fonctionnement sur le véhicule, au cours duquel on moule la cloison dans une troisième position, dite de moulage.

Du fait que l'on moule la cloison dans une position distincte des positions de montage et de fonctionnement, il est possible de mouler la cloison dans une forme ne comprenant pas des contre-dépouilles. II n'est alors plus nécessaire de prévoir des cales mobiles.

De préférence, la troisième position correspond à une position dans laquelle la forme générale de la cloison est dépourvue de contre-dépouille, si bien qu'elle est très facile à démoulée.

De façon avantageuse, on moule la cloison à partir de deux matériaux distincts de manière, par exemple, à former dans la cloison une portion périphérique relativement souple (afin que la cloison s'adapte à la géométrie du véhicule) et une portion principale relativement rigide.

Par exemple, on injecte les deux matériaux, en utilisant un moule comprenant une écluse. Dans ce cas, l'invention est particulièrement avantageuse : comme le moule est simplifié par la présence de la troisième position, on libère de la place, ce qui autorise l'utilisation d'écluse et rend donc possible à la fois la présence de formes complexes pour des moyens de verrouillage et l'utilisation de deux matériaux pour réaliser la cloison.

Un procédé selon l'invention peut en outre comporter l'une ou plusieurs des caractéristiques selon lesquelles :
- la cloison comporte une paroi mobile par rapport à la face avant et une paroi fixe par rapport à la paroi mobile et à la face avant, reliées entre elles par un film charnière, de façon que les trois positions de la cloison correspondent à des positions de pivotement de la partie mobile par rapport à la partie fixe ; ainsi le film charnière constitue un moyen simple et économique pour fournir les trois positions ;
- la cloison comporte des premiers moyens complémentaires d'encliquetage, qui coopèrent entre eux lorsque la pièce est en position de montage ;
- la cloison comporte des seconds moyens complémentaires d'encliquetage, distincts des premiers moyens, qui coopèrent entre eux lorsque la pièce est en position de fonctionnement ;
- les premiers moyens complémentaires d'encliquetage coopèrent selon un premier plan de butée, les seconds moyens complémentaires d'encliquetage coopèrent selon un second plan de butée, et les premiers et seconds plans de butées sont inclinés l'un par rapport à l'autre, de préférence orthogonaux ; du fait que ces plans sont inclinés, les formes des moyens de verrouillage sont complexes, si bien qu'un démoulage de la cloison dans la position de montage ou de fonctionnement est compliqué ;
- la troisième position correspond à une position dans laquelle les parois avant et arrière sont sensiblement alignées.

L'invention a encore pour objet un moule pour la fabrication d'une cloison selon le procédé selon l'invention, délimitant une empreinte de la cloison dans la troisième position de moulage.

L'invention sera mieux comprise à la lecture de la description qui va suivre, donnée uniquement à titre d'exemple et faite en se référant aux dessins dans lesquels :
- la figure 1 est une vue schématique en perspective d'une face avant technique de véhicule automobile sur laquelle sont montées des cloisons anti-recyclage d'air fabriquées grâce à un procédé de fabrication selon l'invention ;
- la figure 2 est une vue schématique de côté de la cloison de la figure 1 représentée dans une première position de montage ;
- les figures 3 et 4 sont des vues en détail respectivement des parties cerclées 3 et 4 de la figure 2, à échelle agrandie ;
- la figure 5 est une vue en coupe de la cloison de la figure 2 selon la ligne 5-5 de la figure 2 ;
- la figure 6 est une vue schématique de côté de la cloison de la figure 1 dans une deuxième position de fonctionnement ;
- la figure 7 est une vue en coupe de la cloison de la figure 6 selon la ligne 7-7 de la figure 6 ;
- la figure 8 est une vue de côté de la cloison de la figure 1 dans une troisième position de moulage ;
- les figures 9 et 10 sont respectivement des vues en détail des parties cerclées 9 et 10 de la figure 8, à échelle agrandie ;
- la figure 11 est une vue en coupe de la cloison de la figure 8 selon la ligne 11-11 de la figure 8.

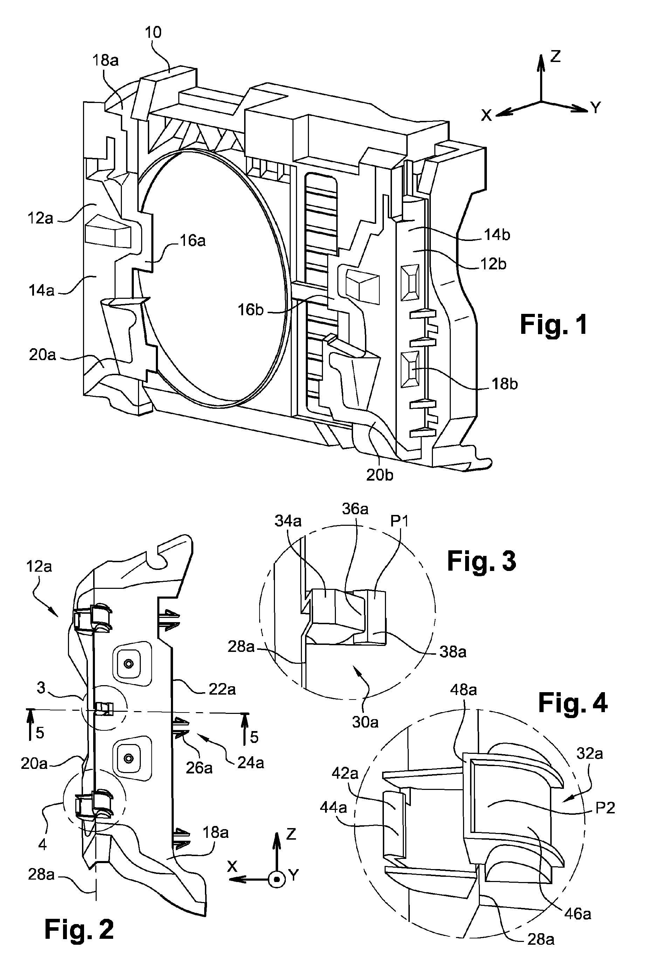

On a représenté sur la figure 1 une face avant technique de véhicule automobile désignée par la référence générale 10. De façon classique, la face avant technique 10 est un élément structurel susceptible d'intégrer ou supporter divers équipements du véhicule automobile tels que notamment des projecteurs, un groupe moto-ventilateur, un échangeur thermique ou encore un module de refroidissement complets (non représentés), etc.

La face avant technique 10, ainsi pourvue de ces équipements forme un module unitaire prêt à être monté sur la véhicule automobile par le constructeur. Le montage de ce module unitaire se fait notamment par raccordement à des éléments de structures latéraux du véhicule, tels que des longerons (non représentés).

On a également représenté sur la figure 1 deux cloisons d'anti-recyclage d'air, notamment une cloison droite 12a et une cloison gauche 12b, montées sur la face avant technique 10.

Par la suite, on notera par les références numériques des éléments associés à la cloison gauche 12a avec un indice a et les éléments associés à la cloison droite 12b avec un indice b.

De préférence, chaque cloison 12a, 12b comprend une portion principale 14a, 14b relativement rigide assurant une fonction de guide d'air et une portion périphérique 16a, 16b relativement souple assurant une fonction de joint d'étanchéité avec des éléments de l'environnement (non représentés) de la cloison 12a, 12b, agencés entre la face avant technique et la peau de pare-chocs.

Par exemple, la portion périphérique 16a, 16b est réalisée dans un matériau comprenant essentiellement de l'EPDM (acronyme anglais pour terpolymère éthylène-propylène-diène) et la portion principale 14a, 14b est réalisée dans un matériau comprenant essentiellement du polypropylène.

Dans la suite de la description, nous allons décrire en détail la cloison gauche 12a représentée sur les figures 2 à 11. Bien entendu, la description détaillée de la cloison gauche 12a s'applique également à la cloison droite 12b représentée sur la figure 1.

Dans l'exemple décrit, la cloison 12a est montée pivotante sur la face avant technique 10. Ainsi, la cloison 12a comprend une partie 18a fixe par rapport à la face avant 10 et une partie 20a mobile par rapport à la face avant 10 et la partie fixe 18a.

La partie fixe 18a comprend une bordure 22a d'appui sur la face avant 10 comprenant des moyens 24a de fixation de la cloison 12a à la face avant 10. Les moyens de fixation 24a comprennent par exemple trois clips 26a de fixation destinés à être clipsés dans au moins trois ouvertures (non représentées) correspondantes ménagées à cet effet sur la face avant 10.

Dans l'exemple décrit, les deux parties mobile 20a et fixe 18a sont reliées entre elles par un film charnière 28a pour le pivotement de la partie mobile 20a par rapport à la partie fixe 18a, représenté par une ligne en traits discontinus. Plus précisément, le film charnière 28a comprend une zone déformable d'épaisseur inférieure à celles des parois fixe 18a et mobile 20a.

Comme illustré sur la figure 2, le film charnière 28a s'étend selon une direction longitudinale parallèle à un axe Z, l'axe Z étant perpendiculaire à une direction de déplacement du véhicule automobile définie par un axe X et à une direction transversale du véhicule automobile définie par un axe Y.

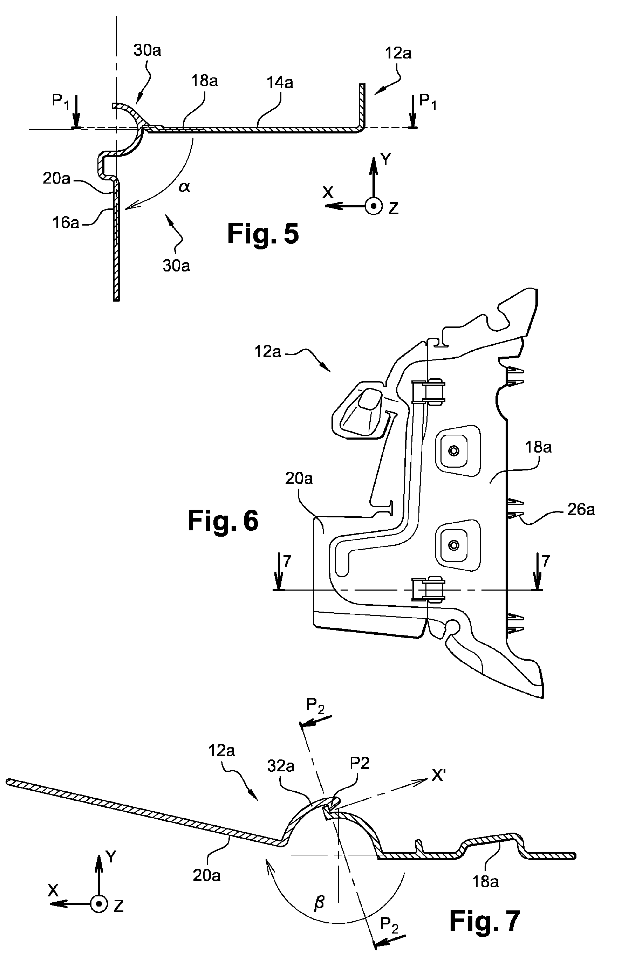

La cloison 12a est ainsi susceptible d'adopter une position de montage dans laquelle la cloison 12a est rabattue contre la face avant 10 (figures 1 et 2) et une position de fonctionnement dans laquelle la cloison 12a est dépliée (figure 6) et destinée à venir en contact avec des éléments de son environnement (non représentés).

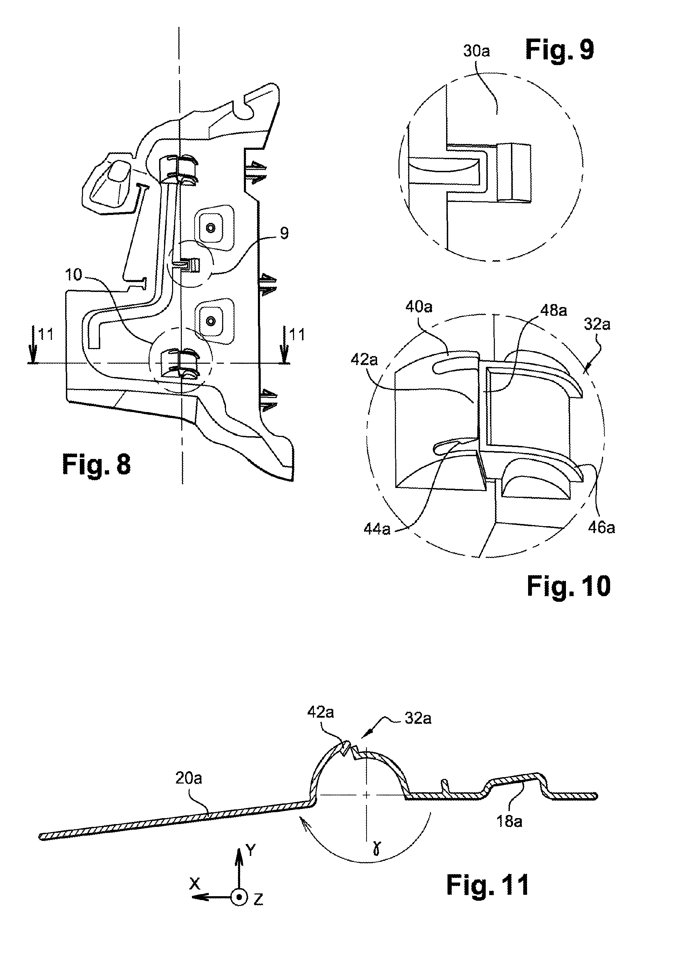

En particulier, dans la position de montage, la partie fixe 18a et la partie mobile 20a forment entre elles un angle α sensiblement égal à 90° (voir figure 5). Dans la position de fonctionnement, la partie fixe 18a et la partie mobile 20a forment entre elles un angle β sensiblement égal à 200° (voir figure 7). Dans la position de moulage, elles forment un angle γ sensiblement égal à 180° (figure 11).

Afin d'éviter tout déplacement intempestif de la cloison 12a d'une position à une autre, la cloison 12a est également munie de premiers moyens 30a complémentaires d'encliquetage illustrés sur les figures 3 et 5 pour le verrouillage de la cloison 12a dans la position de montage et de seconds moyens 32a complémentaires d'encliquetage illustrés sur les figures 4 et 7 pour le verrouillage de la cloison 12a dans la position de fonctionnement.

Plus précisément, comme cela ressort de la figure 3, les premiers moyens complémentaires d'encliquetage 30a comprennent essentiellement un ergot 34a muni d'une patte 36a d'extrémité déformable élastiquement, moulé sur la partie mobile 20a et un organe 38a plan formant butée, moulé sur la partie fixe 18a.

L'ergot 34a et l'organe 38a coopèrent entre eux dans la position de montage selon un premier plan P1 de butée orthogonal à l'axe Y, ce plan comprenant la surface de prise des premiers moyens d'encliquetages 30a. En particulier, lors du rabattement de la partie mobile 20a vers la face avant 10, la patte d'extrémité 36a est destinée à basculer par-dessus l'organe de butée 38a dans la position de montage de la cloison 12a.

Les deuxièmes moyens complémentaires d'encliquetage 32a, illustrés en détail sur les figures 4 et 10, comprennent un premier organe 40a comprenant une languette 42a munie d'une portion 44a d'extrémité courbée, moulé sur la partie mobile 20a et un deuxième organe 46a comprenant un rebord 48a d'encliquetage, moulé sur la partie fixe 18a. Les deux organes 40a et 46a coopèrent entre eux dans la position de fonctionnement selon un second plan de butée P2 sensiblement orthogonal à l'axe X, comprenant la surface de prise des seconds moyens d'encliquetage 32a.

En particulier, lors de l'éloignement de la partie mobile 20a de la face avant 10, la portion d'extrémité courbée 44a de la languette 42a est destinée à venir en prise avec le rebord 48a du deuxième organe 46a dans la position de fonctionnement de la cloison 12a (voir figure 7).

Les premiers moyens complémentaires 30a et les seconds moyens complémentaires 32a sont agencés sur la cloison 12a de manière à ce que les premier P1 et second P2 plans de butée soient inclinés l'un par rapport à 30a et 32a l'autre et de préférence orthogonaux. Ainsi, comme ces plans sont inclinés, les moyens comprennent des formes d'encliquetage orientées différemment, ce qui rend complexe un démoulage dans l'une ou l'autre des positions. Dans la position de montage, seuls les premiers moyens complémentaires 30a coopèrent entre eux alors que dans la position de fonctionnement, seuls les seconds moyens coopèrent 32a entre eux.

Pour la fabrication de la cloison 12a, on définit en plus de ces deux positions de fonctionnement et de montage, une troisième position, dite de moulage.

Dans cette troisième position, la partie mobile 20a et la partie fixe 18a sont sensiblement alignées et forment entre elles un angle γ de 180° de sorte que la forme générale de la cloison 12a est dépourvue de contre-dépouilles (voir figures 8 à 10), donc facile à démouler. Par ailleurs, dans la position de moulage, aucun des premiers 30a ou des seconds 32a moyens d'encliquetage ne coopèrent entre eux (voir figures 9 et 10).

Nous allons maintenant décrire les principales étapes d'un procédé de fabrication de la cloison 12a d'anti-recyclage d'air.

Tout d'abord, on prépare un moule (non représenté) délimitant une empreinte de la cloison 12a dans sa troisième position de moulage. Du fait que la cloison 12a, dans sa troisième position de moulage, a une forme générale dépourvue de contre-dépouilles, il n'est pas nécessaire de prévoir de cales mobiles.

Ensuite, on moule la cloison 12a de préférence à partir de deux matériaux distincts de façon à former les portions principale et périphérique de la cloison.

Ainsi, on injecte un matériau comprenant essentiellement du polypropylène pour former la portion principale et un matériau comprenant essentiellement de l'EPDM pour former la portion périphérique.

De préférence, le moule comprend au moins une écluse formant une paroi de séparation entre les deux portions.

Une fois la cloison 12a réalisée, on la rapporte sur la face technique, en la verrouillant dans la première position de montage. Ainsi, la cloison 12a étant rabattue contre la face avant, on peut monter le tout sur la caisse par le bas. Une fois la face avant montée sur la caisse, on déploie les cloisons 12a, 12b dans leur deuxième position de fonctionnement, de façon à guider l'air.

On notera enfin que l'invention n'est pas limitée aux modes de réalisation précédemment décrits.

## Revendications

1. Procédé de fabrication d'une cloison (12a) anti-recyclage d'air, **caractérisé en ce que** la cloison est destinée à être montée pivotante sur une face avant technique (10) de véhicule automobile entre :
- une première position, dite de montage,
- une seconde position, dite de fonctionnement sur le véhicule, et
au cours duquel on moule la cloison dans une troisième position, dite de moulage.

2. Procédé selon la revendication 1, au cours duquel la troisième position correspond à une position dans laquelle la forme générale de la cloison (12a) est dépourvue de contre-dépouille.

3. Procédé selon la revendication 1 ou 2, au cours duquel on moule la cloison à partir de deux matériaux distincts.

4. Procédé selon la revendication 3, au cours duquel on injecte les deux matériaux, en utilisant un moule comprenant une écluse.

5. Procédé selon l'une quelconque des revendications 1 à 4, dans lequel la cloison comporte une paroi (20a) mobile par rapport à la face avant et une paroi (18a) fixe par rapport à la paroi mobile et à la face avant, reliées entre elles par un film charnière (28a), de façon que les trois positions de la cloison correspondent à des positions de pivotement de la partie mobile par rapport à la partie fixe.

6. Procédé selon la revendication 5, dans lequel la cloison comporte des premiers (30a) moyens complémentaires d'encliquetage, qui coopèrent entre eux lorsque la cloison est en position de montage.

7. Procédé selon la revendication 5 ou 6, dans lequel la cloison comporte des seconds (32a) moyens complémentaires d'encliquetage, distincts des premiers moyens, qui coopèrent entre eux lorsque la cloison est en position de fonctionnement.

8. Procédé selon la revendication 6 et 7, dans lequel les premiers (30a) moyens complémentaires d'encliquetage coopèrent selon un premier plan de butée (P1), les seconds (32a) moyens complémentaires d'encliquetage coopèrent selon un second plan de butée (P2), et les premier (P1) et second (P2) plans de butées sont inclinés l'un par rapport à l'autre, de préférence sensiblement orthogonaux.

9. Procédé selon l'une quelconque des revendications 5 à 8, au cours duquel la troisième position correspond à une position dans laquelle les parois mobile (20a) et fixe (18a) sont sensiblement alignées.

10. Moule pour la fabrication d'une cloison selon le procédé selon l'une quelconque des revendications 1 à 9, délimitant une empreinte de la cloison (12a) dans la troisième position de moulage.
